# EUROPÄISCHE PATENTSCHRIFT

(11) **EP 2 947 291 B1**
(45) Veröffentlichungstag und Bekanntmachung des Hinweises auf die Patenterteilung: **12.07.2017**
(21) Anmeldenummer: 15167529.5
(22) Anmeldetag: 13.05.2015
(51) Int. Cl.: F01N 3/10, F01N 3/18, F01N 3/26, F02D 41/02, F01N 13/00

(54) **VERFAHREN ZUM ANFAHREN EINES THERMOREAKTORS**
METHOD FOR STARTING A THERMAL REACTOR
PROCÉDÉ DE DÉMARRAGE D'UN RÉACTEUR THERMIQUE

(30) Priorität: 20.04.2015 AT 3762014
(43) Veröffentlichungstag der Anmeldung: 25.11.2015
(73) Patentinhaber: GE Jenbacher GmbH & Co OG, 6200 Jenbach (AT)
(72) Erfinder: Fuchs, Jochen, 6112 Wattens (AT); Hillen, Friedhelm, 6200 Jenbach (AT)
(74) Vertreter: Torggler & Hofinger Patentanwälte

(56) Entgegenhaltungen:
- WO-A1-91/13242
- US-A- 2 946 651
- US-A- 3 927 523
- US-A- 5 243 818

## Beschreibung

Die Erfindung betrifft Verfahren zum Anfahren eines in einem Abgasstrom eines Verbrennungsmotors angeordneten Thermoreaktors, wobei Brenngas in wenigstens einem Zylinder des Verbrennungsmotors durch Fremdzündung gezündet wird und das aus der Verbrennung des Brenngases resultierende Abgas als Abgasstrom zumindest teilweise dem Thermoreaktor zugeführt wird.

Zur Einhaltung der Emissionsgrenzwerte von Verbrennungskraftmaschinen werden häufig Verfahren zur Abgasnachbehandlung eingesetzt. Ein auch aus dem Bereich der Abgasnachbehandlung von kalorischen Kraftwerken bekanntes Verfahren ist die regenerative thermische Oxidation (RTO), in welcher unverbrannte Kohlenwasserstoffe und andere oxidierbare Abgasbestandteile thermisch oxidiert werden. Bei der regenerativen thermischen Oxidation wird das Abgas zunächst über einen, meist aus keramischem Schüttgut oder Wabenkörpern bestehenden, Wärmespeicher geleitet, um schließlich in die Reaktionskammer zu gelangen. In der Reaktionskammer kann das Abgas durch zusätzliche Heizeinrichtungen weiter erwärmt werden, bis eine thermische Oxidation der unerwünschten Abgasbestandteile stattfinden kann. Anschließend strömt das Abgas durch einen weiteren Wärmespeicher zum Auspuff und wird in die Umgebung entlassen. Im Betrieb wird die Strömungsrichtung alternierend geändert, wodurch das Abgas vor Erreichen der Reaktionskammer vorgewärmt wird, wodurch sich eine Energieersparnis in der weiteren Erwärmung des Abgases einstellt. Die Zusatzheizung kann durch Gasinjektion oder Brenner (sogenanntes Stützgas) oder eine elektrische Zusatzheizung eingerichtet sein. Die Reaktionskammer weist meistens einen freien Strömungsquerschnitt auf, wodurch die Verweildauer des Abgases in der Reaktionskammer erhöht wird und die Oxidation in Form einer Gasphasenreaktion ablaufen kann. Besonders relevant unter den zu oxidierenden Spezies im Abgas sind Kohlenmonoxid (CO) und Methan (CH4).

Eine solche Einrichtung ist z. B. unter dem Markennamen CL.AIR^{®} von GE Jenbacher bekannt. In diesem Verfahren wird Abgas auf ca. 700-800 °C aufgeheizt und es erfolgt die Oxidation der unverbrannten Kohlenwasserstoffe und des Kohlenmonoxids zu Wasserdampf und Kohlenstoffdioxid. Der CL.AIR^{®}-Thermoreaktor ist als regenerativer Wärmetauscher aufgebaut und besteht aus zwei Speichermassen, einer Reaktionskammer sowie einem Umschaltmechanismus. Das Abgas strömt mit einer Temperatur von etwa 530 °C vom Motor kommend über einen Umschaltmechanismus in eine erste Speichermasse, wo es auf ungefähr 800 °C aufgeheizt wird. In der Reaktionskammer reagiert das Abgas mit dem vorhandenen Sauerstoff, wobei Kohlenmonoxid und unverbrannte Kohlenwasserstoffe zu Kohlendioxid und Wasser oxidiert werden. Beim Durchströmen der zweiten Speichermasse gibt das Abgas wieder Wärme ab und erreicht mit einer Temperatur von 550 bis 570 °C den Umschaltmechanismus, der es dem Kamin oder einer nachgeschalteten Abgaswärmenutzung zuleitet.

Nachteilig an aus dem Stand der Technik bekannten Lösungen ist es, dass während der Startphase des Motors, wenn also der Thermoreaktor seine Betriebstemperatur noch nicht erreicht hat, oxidierbare Spezies in unerwünscht hohlem Ausmaß emittiert werden.

Die Dokumente US3927523 und US5243818 offenbaren solche Motoren und Verfahren zum Anfahren eines Thermoreaktors.

Es ist daher Aufgabe der vorliegenden Erfindung, ein Verfahren anzugeben, durch welche das Anfahren (die Startphase) eines in einem Abgasstrom eines Verbrennungsmotors angeordneten Thermoreaktors verbessert wird.

Diese Aufgabe wird gelöst durch ein Verfahren mit den Merkmalen des Anspruchs 1. Vorteilhafte Ausführungsformen sind in den abhängigen Ansprüchen definiert.

In der Variante gemäß Anspruch 1 ist vorgesehen, dass zur schnelleren Aufheizung des Thermoreaktors die Schaltzeit des Umschaltmechanismus verringert wird. Wie eingangs beschrieben, weist ein Thermoreaktor einen Umschaltmechanismus auf, über welchen die Strömungsrichtung durch die wenigstens zwei Speichermassen und die Reaktionskammer alternierend gewechselt werden kann. Es ist also vorgesehen, die Schaltzeit zur Umkehr der Strömungsrichtung durch den Thermoreaktor gegenüber der Schaltzeit im Normalbetrieb zu verringern. Durch diese Maßnahme wird erreicht, dass die Temperaturen in den der Reaktionskammer zugewandten Abschnitten der Speichermassen schneller erhöht werden. Typische Schaltzeiten im Normalbetrieb eines Thermoreaktors liegen bei etwa 3 Minuten, d. h. alle 3 Minuten wird die Strömungsrichtung durch den Thermoreaktor umgekehrt. Gemäß der Variante ist vorgesehen, die Schaltzeiten gegenüber dem Normalbetrieb zu reduzieren, beispielsweise 1 oder 2 Minuten.

Dadurch wird ein Temperaturausgleich innerhalb der Speichermassen verhindert, wodurch sich ein Temperaturgradient solchermaßen ausbildet, dass die Temperatur in dem der Reaktionskammer zugeordneten Volumensabschnitt der Speichermassen deutlich höher ist, als die Temperatur der dem Umschaltmechanismus zugewandten Volumensabschnitt der Speichermassen. Durch die nahe der Reaktionskammer erhöhte Temperatur der Speichermassen wird erreicht, dass die Temperatur des zu oxidierenden Abgases im Bereich der Reaktionskammer gegenüber den konventionellen Schaltzeiten erhöht wird. Auch durch diese Maßnahme wird erreicht, dass der Thermoreaktor beim Anfahren rascher die erforderlichen Umsatzraten erreicht.

Der besondere Vorteil der beschriebenen Maßnahmen liegt darin, dass weit weniger Energie, sei es elektrische Energie oder durch eine Zusatzheizung über Brenner bzw. Gasinjektion, in das Aufheizen des Thermoreaktors investiert werden muss. Ist der stationäre Zustand des Thermoreaktors erreicht, also das Anfahren abgeschlossen, kann die Schaltzeit verlängert werden. Die Maßnahmen werden so lange gesetzt, bis aus einer Messung hervorgeht, dass der Anfahrvorgang des Thermoreaktors abgeschlossen ist. Der Anfahrvorgang kann typischerweise als beendet betrachtet werden, wenn die Reaktionskammer eine Temperatur von 700-800°C erreicht hat.

Bevorzugt kann vorgesehen sein, dass die Temperatur des aus der Verbrennung des Brenngases resultierenden Abgases dadurch erhöht wird, dass der Zeitpunkt der Fremdzündung im Vergleich zu einem vorliegenden Zeitpunkt später gewählt wird. Durch Verschieben des Zündzeitpunktes in der Phase des Anfahrens wird erreicht, dass dem Thermoreaktor Abgas auf einem höheren Temperaturniveau zugeführt wird, somit die Speichermassen und die Reaktionskammer des Thermoreaktors mehr Energie aufnehmen und dadurch der Thermoreaktor rascher auf Betriebstemperatur gebracht werden kann.

Bevorzugt kann vorgesehen sein, dass eine Leistungsabgabe des Verbrennungsmotors zur Verringerung des Massenstromes des Abgasstromes verringert wird. Durch Verringerung der Leistungsabgabe des Verbrennungsmotors wird erreicht, dass der durch den Thermoreaktor strömende Abgasmassenstrom verringert wird. Es ergibt sich dadurch eine erhöhte Verweildauer des Abgases im Thermoreaktor. Damit wird der Austrag an thermischer Energie aus dem Thermoreaktor verringert. Die Maßnahme der Reduktion der Leistungsabgabe des Verbrennungsmotors kann alternativ oder zusätzlich zur oben beschriebenen Verzögerung des Zündzeitpunktes gesetzt werden. Beide Maßnahmen führen dazu, dass der Thermoreaktor rascher auf die zur thermischen Oxidation des Abgases notwendige Temperatur gelangt.

In einem bevorzugten Ausführungsbeispiel kann vorgesehen sein, dass das Abgas durch eine externe Wärmequelle, vorzugsweise durch elektrische Heizstäbe geheizt wird. Hier ist also eine Zusatzheizung vorgesehen, durch die der Thermoreaktor rascher auf die zur Oxidation der im Abgas befindlichen unverbrannten Kohlenwasserstoffe und Kohlenmonoxid notwendige Temperatur gelangt. Die externe Wärmequelle kann durch elektrische Heizstäbe realisiert sein. Ebenso möglich ist es, das Abgas durch Verbrennung von Brenngas zu heizen.

Die Erfindung wird im Folgenden durch die Figuren näher erläutert. Dabei zeigt:
- Fig. 1: eine schematische Darstellung einer Verbrennungskraftmaschine mit nachgeschaltetem Thermoreaktor
- Fig. 2: Temperaturverlauf beim Anfahren eines Thermoreaktors (schematisch)

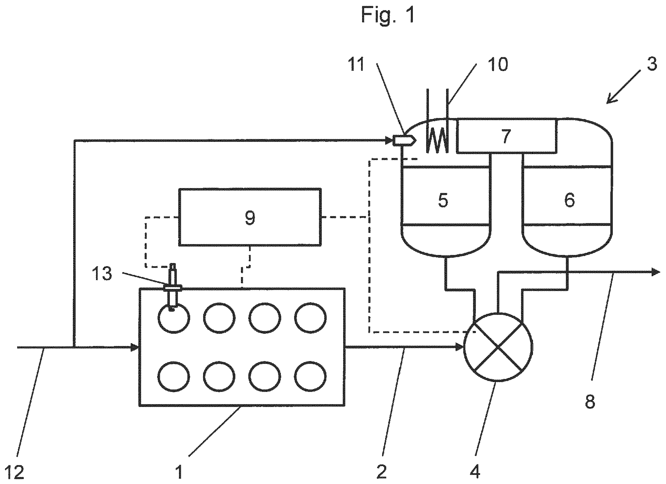

Figur 1 zeigt eine Verbrennungskraftmaschine 1, von der unbehandeltes Abgas durch die Abgassammelleitung 2 in Richtung eines Umschaltmechanismus 4 strömt. Vom Umschaltmechanismus 4 strömt das Abgas weiter in den Thermoreaktor 3, wobei der Umschaltmechanismus 4 die Strömungsrichtung durch den Thermoreaktor 3 alternierend ändern kann. Die Strömungsrichtung kann entweder zuerst über Speichermasse 5, die Reaktionskammer 7 und anschließend Speichermasse 6 erfolgen oder umgekehrt. Anschließend verlassen die Abgase über die Leitung 8 die Anlage.

Durch die elektrische Zusatzheizung 10 ist der Thermoreaktor beheizbar. Über einen Brenner bzw. Injektor 11 kann dem Thermoreaktor außerdem Stützgas als Zusatzheizung zugeführt werden. Das Gas für Brenner bzw. Injektor 11 kann der Kraftstoffleitung 12 entnommen werden.

Die Steuer- / Regelungseinrichtung 9 erfasst über die strichliert eingezeichneten Signalleitungen Signale von Temperatursensoren (nicht gezeigt) aus dem Bereich des Umschaltmechanismus 4 und der Reaktionskammer 7. Weiters empfängt die Steuer- / Regelungseinrichtung 9 von der Verbrennungskraftmaschine 1 Signale, die für den Betriebszustand der Verbrennungskraftmaschine 1 charakteristisch sind. In Abhängigkeit der erfassten Signale gibt die Steuer- / Regelungseinrichtung 9 Befehle an den Umschaltmechanismus 4 zur Umkehr der Strömungsrichtung durch den Thermoreaktor 3.

Die Steuer- / Regelungseinrichtung 9 übergibt der Verbrennungskraftmaschine 1 Zielwerte der abzugebenden Leistung und / oder Drehzahl.

Schematisch gezeigt ist eine Zündeinrichtung 13. Selbstverständlich ist in Realität jeder Zylinder-Kolben-Einheit wenigstens eine Zündeinrichtung 13 zugeordnet. Die Steuer- / Regelungseinrichtung 9 übergibt der Zündeinrichtung 13 Befehle, unter anderem zum Zeitpunkt der Fremdzündung.

Der Thermoreaktor 3 kann auch andere Bauformen annehmen. So kann beispielsweise vorgesehen sein, dass der Umschaltmechanismus 4 als Drehschieber ausgebildet ist, d. h. als Platte mit wechselweise geschlossenen und geöffneten Segmenten, die die Durchströmung des stromabwärts des Drehschiebers angeordneten Thermoreaktors 3 wechselweise verschließen oder öffnen. Es muss also keineswegs, wie in Figur 1 schematisch gezeigt, eine separate Einhausung der Speichermassen 5 und 6 vorliegen, sondern es kann der Thermoreaktor 3 auch als einstückige Säule von Speichermassen ausgebildet sein, wobei der Drehschieber im Betrieb bestimmte Segmente durchströmbar und andere Segmente geschlossen hält.

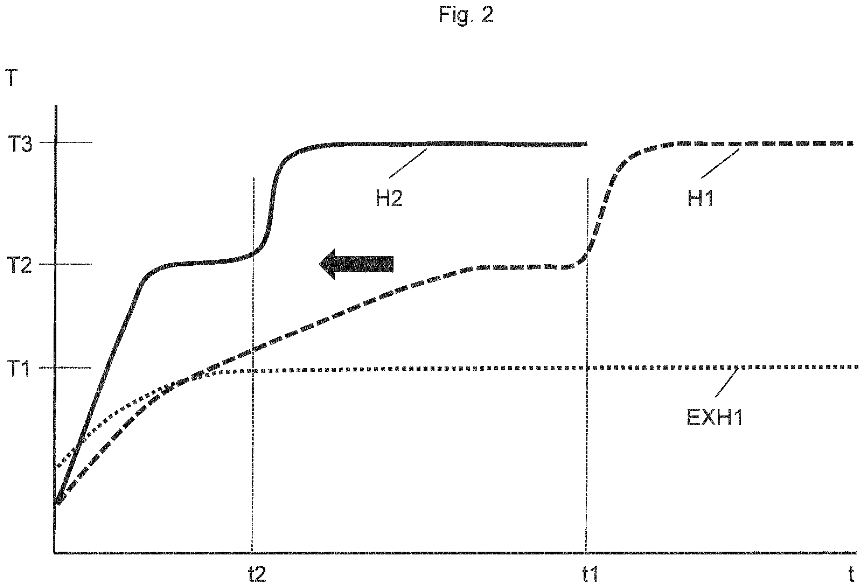

Figur 2 zeigt schematisch den Temperaturverlauf beim Anfahren eines Thermoreaktors nach Stand der Technik im Vergleich zum Temperaturverlauf nach dem verbesserten Verfahren gemäß vorliegender Anmeldung. Aufgetragen ist die Temperatur auf der y-Achse gegen die Zeit auf der x-Achse, wobei die Zeit im Ursprung des Koordinatensystems bei Null beginnt.
Die Temperatur in der Reaktionszone des Thermoreaktors steigt zunächst durch die Wärmeübertragung vom Abgas auf die Reaktionskammer sowie durch die von Anfang an aktive elektrische Zusatzheizung.
Zur Beurteilung des Anfahr-Verhaltens ist jene Zeit maßgeblich, die bis zum Erreichen eines ersten Temperaturplateaus bei Temperatur T2 verstreicht. Die Temperatur T2 wird etwa mit 630°C gewählt. Erst bei Erreichen dieser Temperatur wird die Zusatzheizung durch einen Brenner bzw. Gasinjektion begonnen. Unter dieser Temperatur sollte dem Thermoreaktor kein Gas zugeführt werden, da eine Umsetzung nicht gewährleistet wäre. Zeitbestimmend für das Anfahr-Verhalten ist also die Dauer bis zum Erreichen der Temperatur T2.
Nach Einsetzen der Zusatzheizung durch einen Brenner bzw. Gasinjektion erreicht der Thermoreaktor rasch die Betriebstemperatur T3 von etwa 800°C.

Die strichlierte Linie H1 zeigt den Temperaturverlauf in der Reaktionszone beim Anfahren eines Thermoreaktors nach Stand der Technik. Der Temperaturverlauf des Abgases nach einem Verfahren nach Stand der Technik wird durch die punktierte Kurve EXH1 repräsentiert. Die Abgastemperatur liegt hier im stationären Betrieb bei etwa 530°C (T1).
Zeit t1 markiert den Zeitpunkt des Einsetzens der Stützheizung in der Reaktionszone bei einem Verfahren nach Stand der Technik.

Im Vergleich dazu erreicht die Temperatur der Reaktionszone nach dem verbesserten Verfahren gemäß vorliegender Anmeldung, repräsentiert durch Kurve H2, wesentlich früher, nämlich bei Zeit t2, die Temperatur T2, bei der die Stützheizung aktiviert werden darf. Das Verschieben zu früheren Zeiten ist durch den schwarzen Pfeil versinnbildlicht.

Typische Zeiten für t1 liegen bei 10 Stunden, wenn die Anlage von Raumtemperatur hochgefahren wird, bei 10 Minuten, wenn die Anlage nach nur kurzer Stillstandszeit wieder in Betrieb genommen wird (etwa nach einer Revision von zwei Stunden).

Diese Zeiten können durch Anwendung der in den Varianten bzw. Ausführungsbeispielen beschriebenen Verfahren deutlich reduziert werden.

### Liste der verwendeten Bezugszeichen:

- 1: Verbrennungskraftmaschine
- 2: Abgassammelleitung
- 3: Thermoreaktor
- 4: Umschaltmechanismus
- 5, 6: thermische Speichermassen
- 7: Reaktionskammer
- 8: Abgasleitung
- 9: Steuer- / Regelungseinrichtung
- 10: Elektrische Heizeinrichtung
- 11: Brenner / Injektor
- 12: Brennstoffleitung
- H1: Temperaturverlauf Thermoreaktor nach Stand der Technik
- H2: Temperaturverlauf Thermoreaktor
- EXH1: Abgastemperatur nach Stand der Technik

## Patentansprüche

1. Verfahren zum Anfahren eines in einem Abgasstrom eine Verbrennungsmotors (1) angeordneten Thermoreaktors (3), wobei der Thermoreaktor (3) wenigstens zwei thermische Speichermassen (5, 6) aufweist, die nacheinander durchströmbar sind und wobei Brenngas in wenigstens einem Zylinder des Verbrennungsmotors durch Fremdzündung gezündet wird und das aus der Verbrennung des Brenngases resultierende Abgas als Abgasstrom zumindest teilweise dem Thermoreaktor (3) zugeführt wird, wobei das Abgas abwechselnd für eine Schaltzeit zuerst der einen thermischen Speichermasse zugeführt wird und anschließend die andere thermische Speichermasse durchströmt und umgekehrt, und wobei wenigstens eine externe Wärmequelle (10, 11) zur Aufheizung des Thermoreaktors vorgesehen ist, **dadurch gekennzeichnet, dass** zur schnelleren Aufheizung des Thermoreaktors die Schaltzeit verringert wird.

2. Verfahren zum Anfahren eines in einem Abgasstrom einer Verbrennungskraftmaschine (1) angeordneten Thermoreaktors (3) nach Anspruch 1, wobei Brenngas in wenigstens einem Zylinder der Verbrennungskraftmaschine (1) durch Fremdzündung gezündet wird und das aus der Verbrennung des Brenngases resultierende Abgas als Abgasstrom zumindest teilweise dem Thermoreaktor (3) zugeführt wird, **dadurch gekennzeichnet, dass** die Temperatur des aus der Verbrennung des Brenngases resultierenden Abgases dadurch erhöht wird, dass der Zeitpunkt der Fremdzündung im Vergleich zu einem vorliegenden Zeitpunkt später gewählt wird.

3. Verfahren zum Anfahren eines in einem Abgasstrom einer Verbrennungskraftmaschine (1) angeordneten Thermoreaktors (3) nach wenigstens einem der vorangegangenen Ansprüche, wobei Brenngas in wenigstens einem Zylinder der Verbrennungskraftmaschine (1) durch Fremdzündung gezündet wird und das aus der Verbrennung des Brenngases resultierende Abgas als Abgasstrom zumindest teilweise dem Thermoreaktor (3) zugeführt wird, insbesondere nach Anspruch 2, **dadurch gekennzeichnet, dass** eine Leistungsabgabe des Verbrennungsmotors (1) zur Verringerung des Massenstromes des Abgasstromes verringert wird.

4. Verfahren nach wenigstens einem der Ansprüche 1 bis 3, **dadurch gekennzeichnet, dass** das Abgas durch eine externe Wärmequelle, vorzugsweise durch eine elektrische Heizeinrichtung (10), geheizt wird.

## Claims

1. A method of starting up a thermoreactor (3) arranged in an exhaust gas flow of an internal combustion engine (1), wherein the thermoreactor (3) has at least two thermal storage masses (5, 6) which successively have a flow therethrough and wherein the combustion gas is ignited by spark ignition in at least one cylinder of the internal combustion engine (1) and the exhaust gas resulting from the combustion of the combustion gas is fed at least partially to the thermoreactor (3) as an exhaust gas flow, wherein the exhaust gas is alternately fed for a switching time firstly to the one thermal storage mass and then flows through the other thermal storage mass and vice-versa and wherein there is provided at least one external heat source (10, 11) for heating the thermoreactor, **characterised in that** the switching time is reduced for more rapidly heating up the thermoreactor.

2. A method of starting up a thermoreactor (3) arranged in an exhaust gas flow of an internal combustion engine (1) as set forth in claim 1, wherein combustion gas is ignited by spark ignition in at least one cylinder of the internal combustion engine (1) and the exhaust gas resulting from the combustion of the combustion gas is fed at least partially to the thermoreactor (3) as an exhaust gas flow, **characterised in that** the temperature of the exhaust gas resulting from combustion of the combustion gas is increased by the moment in time of the spark ignition being selected later in comparison with a present moment in time.

3. A method of starting up a thermoreactor (3) arranged in an exhaust gas flow of an internal combustion engine (1) as set forth in at least one of the previous claims, wherein combustion gas is ignited by spark ignition in at least one cylinder of the internal combustion engine (1) and the exhaust gas resulting from the combustion of the combustion gas is fed at least partially to the thermoreactor (3) as an exhaust gas flow, in particular as set forth in claim 2, **characterised in that** a power output of the internal combustion engine (1) is reduced to reduce the mass flow of the exhaust gas flow.

4. A method as set forth in at least one of claims 1 to 3 **characterised in that** the exhaust gas is heated by an external heat source, preferably by an electrical heating device (10).

## Revendications

1. Procédé pour le démarrage d'un thermoréacteur (3) disposé dans un flux de gaz d'échappement d'un moteur à combustion (1), le thermoréacteur (3) comprenant au moins deux masses de stockage thermique (5, 6) qui peuvent être traversées successivement et un gaz combustible étant allumé par allumage à étincelle dans au moins un cylindre du moteur à combustion et le gaz d'échappement résultant de la combustion du gaz combustible étant introduit en tant que flux de gaz d'échappement au moins partiellement dans le thermoréacteur (3), le gaz d'échappement étant introduit alternativement, pendant un temps de commutation, d'abord dans l'une des masses de stockage thermique puis dans l'autre des masses de stockage thermique et inversement et au moins une source de chaleur externe (10, 11) étant prévue pour le chauffage du thermoréacteur, **caractérisé en ce que**, pour le chauffage plus rapide du thermoréacteur, le temps de commutation est réduit.

2. Procédé pour le démarrage d'un thermoréacteur (3) disposé dans un flux de gaz d'échappement d'un moteur à combustion (1) selon la revendication 1, le gaz combustible étant allumé par allumage à étincelle dans au moins un cylindre du moteur à combustion (1) et le gaz d'échappement résultant de la combustion du gaz combustible étant introduit en tant que flux de gaz d'échappement au moins partiellement dans le thermoréacteur (3), **caractérisé en ce que** la température du gaz d'échappement résultant de la combustion du gaz combustible est augmentée grâce au fait que le moment de l'allumage à étincelle est choisi plus tard par rapport à un moment actuel.

3. Procédé pour le démarrage d'un thermoréacteur (3) disposé dans un flux de gaz d'échappement d'un moteur à combustion (1) selon au moins l'une des revendications précédentes, le gaz combustible étant allumé par allumage à étincelle dans au moins un cylindre du moteur à combustion (1) et le gaz d'échappement résultant de la combustion du gaz combustible étant introduit, en tant que flux de gaz d'échappement, au moins partiellement dans le thermoréacteur (3), plus particulièrement selon la revendication 2, **caractérisé en ce qu'**une puissance de sortie du moteur à combustion (1) est réduite pour réduire le flux massique du gaz d'échappement.

4. Procédé selon au moins une des revendications 1 à 3, **caractérisé en ce que** le gaz d'échappement est chauffé par une source de chaleur extérieure, de préférence par un dispositif de chauffage électrique (10).
